Europäisches Patentamt

European Patent Office

Office européen des brevets

(19)

(11) Veröffentlichungsnummer: **0 202 587**
**B1**

(12) **EUROPÄISCHE PATENTSCHRIFT**

(45) Veröffentlichungstag der Patentschrift: **18.07.90**

(51) Int. Cl.⁵: **F 16 H 55/49**

(21) Anmeldenummer: **86106518.3**

(22) Anmeldetag: **14.05.86**

(54) Riemenscheibe für einen Riementrieb.

(30) Priorität: **14.05.85 DE 3517391**

(43) Veröffentlichungstag der Anmeldung:
**26.11.86 Patentblatt 86/48**

(45) Bekanntmachung des Hinweises auf die
Patenterteilung:
**18.07.90 Patentblatt 90/29**

(84) Benannte Vertragsstaaten:
**AT BE CH DE FR GB IT LI NL SE**

(56) Entgegenhaltungen:
**DE-C- 487 214**
**DE-C- 665 260**

**DIN-NORM 2211, Teil 1, März 1984, Beuth**
**Verlag, Berlin;**

(73) Patentinhaber: **Klöckner-Humboldt-Deutz**
**Aktiengesellschaft**
**Deutz-Mülheimer-Strasse 111 Postfach 80 05 09**
**D-5000 Köln 80 (DE)**

(72) Erfinder: **Olszewski, Jerzy Donat, Dipl.-Ing.**
**Gotenstrasse 27**
**D-5300 Bonn 2 (DE)**
Erfinder: **Olszewski, Jan Donat**
**Markt 35**
**D-5100 Aachen (DE)**

EP 0 202 587 B1

Courier Press, Leamington Spa, England.

## Beschreibung

Die Erfindung betrifft eine Rimenscheibe für einen Riementrieb nach dem Oberbegriff des Anspruchs 1, wie sie aus der DIN 2211, Teil 1, März 1984 bekannt ist.

Keilriemen sind seit Jahren robuste und zuverlässige Antriebselemente. Sie werden z.B. zum Antrieb von Nebenaggregaten und im Motorenbau vielfach eingesetzt. Die Geometrie des Keilriemens muß dabei dem Keilwinkel der Scheibenrille angepaßt sein (Antriebstechnik 23, 1984, Nr. 5, Seiten 34 bis 40).

Die das Rillenprofil kennzeichnende Rillenbreite ist als Richtbreite der Scheibenrille bezeichnet und liegt gewöhnlich in der Höhe der Wirkzone des aufgezogenen Keilriemens innerhalb der Scheibenrille. Sie sollte regelmäßig im Bereich von Toleranzwerten mit der Wirkbreite des Keilriemens zusammenfallen (Antriebstechnik 23, 1984, Nr. 2, Seiten 33 ff.).

Demgegenüber steht die Bezugsbreite der Scheibenrille, die die Rillenbreite kennzeichnet und am äußeren Ende der geraden Seitenflanken der Rille gemessen wird.

Ferner ist bei mehrrilligen Keilriemenscheiben der Rillenabstand eine entscheidende Größe. Der Rillenabstand wird von Rillenmitte zu Rillenmitte benachbarter Rillen gleicher Größe gemessen, die zu demselben Riementrieb gehören.

Zugleich ist der Rillenabstand der Mindestabstand von benachbarten Rillen gleicher Größe, die zu verschiedenen Riementrieben gehören.

Zur Übertragung immer größerer Kräfte hat man eine Vielzahl von Riemen entwickelt, bei denen der in der Höhe der Wirkzone eingebettete Zugstrang zur Erhöhung der übertragbaren Leistung bei gleicher Größe der Riemenscheibe radial immer weiter nach außen verlagert wurde. Hierdurch kann der in der Wirkzone eingebettete Zugstrang breiter und damit leistungsfähiger ausgelegt werden.

Bei einem konventionellen, ummantelten Keilriemen liegt der Zugstrang zwischen dem Gummikern und der Gummiauflage, wobei die Riemenflanken durch eine abriebbeständige Gewebeummantelung geschützt sind. Bei einem flankenoffenen Riemen entfällt die Gewebeummantelung, wodurch die Riemen—insbesondere in der Wirkzone—breiter ausgeführt werden kann. Ein flankenoffener Riemen weist einen anisotropen Riemenunterbau auf. Durch die Verwendung von Fasern, die quer zur Laufrichtung ausgerichtet sind, wird die Forderung nach Biegetüchtigkeit einerseits und nach hoher Abriebfestigkeit an den Flanken sowie einer hohen Quersteifigkeit andererseits erfüllt. Das Ausspulen der freiliegenden und bei der Konfektion zum Teil angeschnittenen Zugfasern wird durch eine Präparation verhindert, die eine sichere Haftung in der Einbettmischung gewährleistet.

Der flankenoffene Riemen kann auf genaue Form und Kontur geschliffen werden, was zu einer wesentlichen Verbesserung der Laufruhe führt und eine individuelle Anpassung an Riemenscheiben ermöglicht. Grundsätzlich bietet der flankenoffene Keilriemen Vorzüge durch höhere Biegfestigkeit und Quersteifigkeit, geringerer Dehnung, geringeren Schlupf und höhere Leistungsübertragung. Bei hohen Drehzahlen, extrem kleinen Scheiben und großem Leistungsbedarf ist der flankenoffene Riemen dem ummantelten Keilriemen deutlich überlegen.

Die Wirkzone (der Zugstrang) eines flankenoffenen Keilriemens liegt deutlich oberhalb der Bezugsbreite einer Riemenscheibe, wodurch bei gleicher Baugröße des Riementriebs aufgrund der breiter ausgelegten Wirkzone eine deutlich höhere Leistung übertragen werden kann. Bei einer derartigen, radial außerhalb der Riemenscheibe liegenden Wirkzone des Keilriemens gelangen die Kanten der Scheibenrille (Übergang von den Rillenflanken in die Hüllfläche der Riemenscheibe) jedoch in Kontakt mit den Riemenflanken. Um eine Schädigung der Riemenflanken durch die Kanten bzw. den übergang zu vermeiden, ist gemäß DIN-Norm 2211, Teil 1, März 1984 vorgesehen, die Kanten anzufasen oder zu runden.

Ein Brechen der Kanten durch Anfasen schafft neue Kanten, die den Riemen verletzen können. Grundete Kanten (Übergänge) müssen einen sehr kleinen Rundungsradius aufweisen, da ein zu großer Rundungsradius die radiale Höhe der Riemenscheibe beträchtlich erhöht, wodurch sich der für den Riementrieb vorgesehene Keilriemen nur schwer oder überhaupt nicht mehr auflegen läßt, da aufgrund des Zugstrangs nur eine sehr geringe Längung des Riemens möglich ist.

Darüberhinaus vergrößert ein Übergang mit großem Rundungsradius auch die axiale Baulänge (Rillenabstand) der Riemenscheibe, wodurch sich die Baugröße eines Riementriebs vergrößert. In der Praxis werden daher überwiegend kleine Rundungsradien verwendet.

Derartige gerundete Übergänge graben sich jedoch in die Rillenflanke des Keilriemens ein und verletzen diese erheblich. So hat es sich gezeigt, daß nach einigen Betriebsstunden mechanische Ablösungen im Bereich der Riemenflanken auftreten, die dazu führen, daß der Riemen tiefer in die Scheibenrille einsinkt. Dabei gelangt der quer zur Laufrichtung steife Zugstrang des Riemens in Anlagekontakt mit den Rillenflanken und stützt sich an diesen ab, wodurch—aufgrund der hohen Quersteifigkeit des Riemens—der Reibschluß des unterhalb des Zugstrangs liegenden Riemenbereichs zu den Rillenflanken weitgehend verlorengeht. Hieraus folgt, daß nunmehr der Zugstrang einen unverhältnismäßig großen Anteil der aus der Vorspannung des Keilriemens resultierenden Querkraft, die den Kraftschluß ergibt, übernehmen muß. Der schmale Bereich der Wirkzone wird dadurch mechanisch erheblich überlastet. Aufgrund des geringen Kraftschlusses der Riemenflanken zu den Rillenflanken beginnt der Riemen zu gleiten, nutzt sich hierbei erheblich ab, wird thermisch überlastet und fällt nach kurzer Zeit aus. Ferner besteht die Gefahr, daß die im Bereich der Bezugsbreite liegende Zugstrang durch die Rillenkanten unmittelbar beschädigt wird, so daß der tragende Aufbau des Riemens zerstört wird.

Weist ein Riementrieb Fluchtungsfehler zwischen der antreibenden und der abtreibenden Riemenscheibe auf, so treten die durch den Übergang (die Kanten) verursachten Schäden—die zum Ausfall des Riemens führen—schon nach wenigen Betriebsstunden auf. Um bei hoher Leistungsübertragung ausreichende Standzeiten eines Riementriebes zu gewährleisten, müssen sowohl der Riemen wie die Riemenscheiben äußerst präzise gefertigt, einander angepaßt sein und im Bereich enger Toleranzen montiert werden.

Der Erfindung liegt die Aufgabe zugrunde eine Riemenscheibe nach dem Oberbegriff des Anspruchs 1 derart weiterzubilden, daß bei hoher Leistungsübertragung und kleinen Baugrößen der Riemenscheiben die Standzeiten eines Riementriebes erhöht und eine mechanische Beschädigung des Keilriemens weitgehend vermieden ist.

Diese Aufgabe wird durch die kennzeichnenden Merkmale des Anspruchs 1 gelöst. Die Rillenflanke geht an ihrem äußeren Ende in einen Bogen mit einem extrem großen Krümmungsradius über, wodurch sich die nutzbare Anlagefläche der Rillenflanke über ihre Ende hinaus verlängert. Der anschließende Krümmungsradius nimmt zur Hüllkurve bzw. Mantelfläche der Riemenscheibe ab, wobei der an die Hüllkurve anschließende Bogen einen Krümmungsradius hat, der um ein vielfaches kleiner ist als der größe Krümmungsradius des Übergangs.

Durch diese Ausbildung ist die Durchmesservergrößerung der Riemenscheibe gegenüber bekannten Anordnungen nur unwesentlich größer, so daß auch ein Riemen hoher Leistungsfähigkeit mit einem nur wenig längbarem Zugstrang problemlos auf die einander zugeordneten Riemenscheiben eines Riementriebes aufgelegt werden kann. Aufgrund des sehr kleinen Krümmungsradius im Bereich der Hüllkurve der Riemenscheibe ist die axiale Baulänge (Rillenabstand) der Riemenscheibe nicht erhöht, so daß die Baugröße eines aus erfindungsgemäßen Riemenscheiben zusammengesetzten Riementriebes sehr klein gehalten werden kann. Bei sehr großen Rundungsradien ist der Rillenabstand daher klein, so daß auch die axiale Baulänge einer mehrrilligen Riemenscheibe sehr gering ist.

Die erfindungsgemäße Ausbildung des Übergangs der Rillenflanke zur Hüllkurve der Riemenscheibe gewährleistet weiter ein sanftes Hereingleiten des Riemens in die Scheibenrille, ohne daß die Riemenflanke durch scharfe Kanten oder zu scharfe Rundungen mechanisch beschädigt werden. Auch bei einem Fluchtungsfehler zugeordneter Riemenscheiben hat sich gezeigt, daß aufgrund des erfindungsgemäßen Übergangs ein aufgelegter Riemen ohne mechanische Beschädigung seiner Riemenflanken den Fluchtungsfehler auch über eine längere Betriebszeit hinweg ausgleichen kann. Die beim Stand der Technik zur Erzielung einer hohen Standzeit geforderten hohen Genauigkeiten sind für einen Riementrieb mit den erfindungsgemäßen Riemenscheiben nicht erforderlich. Vielmehr hat sich gezeigt, daß bei den erfindungsgemäßen Riemenscheiben Montagetoleranzen und Fertigungstoleranzen zulässig sind, ohne daß hierdurch die Standzeit eines Riementriebes beeinträchtigt wird.

Das aufgrund der erfindungsgemäßen Gestaltung des Übergangs erzielte sanfte Einlaufen des Keilriemens in die Scheibenrille ist insbesondere bei schwingungsbehafteten Antrieben von Vorteil. Wird der Riemen aufgrund Schwingungen seitlich verlagert, so wird er durch der erindungsgemäß gestalteten Übergang sanft in die Scheibenrille zurückgeführt, ohne daß mechanische Beschädigungen des Riemens auftreten.

Auch bei einer erfindungsgemäßen Gestaltung des Übergangs kann nicht vermieden werden, daß der Zugstrang bzw. der Keilriemen aufgrund von Abnutzungen der Riemenflanken in die Scheibenrille eintauchen. Bei einer—aufgrund Abnutzung—in die Scheibenrille erfolgten Verlagerung des Keilriemens wird die seitlich steife Wirkzone bei ihrer Absenkung gleichzeitig sanft stärker belastet. Dies geht mit einer höheren Belastung der elastisch offenen Riemenflanken einher, wodurch sich jeweils ein neuer Gleichgewichtszustand einstellt. Dieser bleibt über eine längere Betriebsdauer unverändert erhalten und stellt eine lange Lebensdauer des Keilriemens sicher. Bei Antrieben mit mehreren Keilriemen in einem Satz nebeneinander erfolgt dabei ein günster "Lastausgleich" der einzelnen Riemen untereinander, der den Verschleiß des gesamten Riemensatzes erheblich reduziert.

In vorteilhafter Weise nehmen die unterschiedlichen Krümmungsradien des Übergangs ausgehend von der Rillenflanke zur äußeren Hüllkurve hin kontinuierlich ab. Die so erhaltene Kurve des Übergangs ist gleichmäßig und stellt eine sanfte Führung des Riemens sicher. Im Gegensatz zu einer stetigen Kurve kann es auch vorteilhaft sein, die Radien diskontinuierlich zu ändern.

Um die erfindungsgemäße Riemenscheibe mit modernen NC-Maschinen fertigen zu können, ist es vorteilhaft, daß die unterschiedlichen Radien durch eine differenzierbare mathematische Funktion bestimmt werden. Hierzu sind Kegelschnittfunktionen wie Parabeln, Ellipsen, Hyperbeln o.dgl. zweckmäßig. Der Übergang läßt sich auch anhand einer transzendenten, vorzugsweise trigonometrischen Funktion, wie z.B. eine Sinusfunktion, fertigen.

In einem bevorzugten Ausführungsbeispiel ist die Funktion der Radien eine einfache Parabel zweiten Grades, wobei der Scheitel der Parabel ein Punkt der zylindrischen Mantelfläche der Riemenscheibe ist und ein Parabelast im Bereich der Bezugsbreite der Scheibenrille in die Rillenfläche übergeht. Eine derartige Ausbildung hat in der Praxis zu hohen Standzeiten geführt.

Weitere Merkmale der Erfindung ergeben sich aus den weiteren Ansprüche, der folgenden Beschreibung und der Zeichnung, in der ein Ausführungsbeispiel der Erfindung schematisch dargestellt ist. Es zeigen:

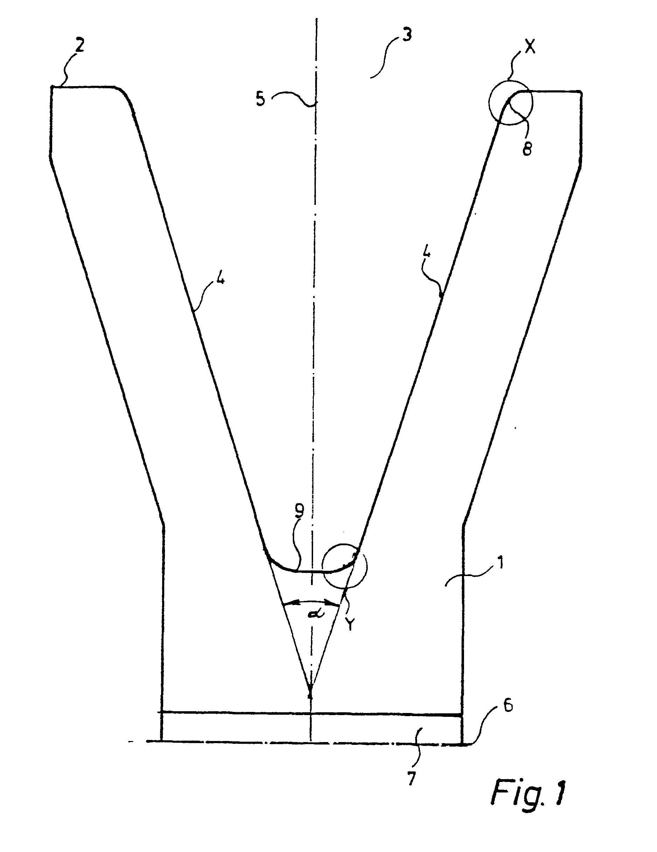

Fig. 1 einen Teilschnitt durch eine erfindungsgemäße Riemenscheibe,

Fig. 2 eine Einzelheit X aus Fig. 1 in vergrößerter Darstellung,

Fig. 3 eine Einzelheit Y aus Fig. 1 in vergrößerter Darstellung.

Die Riemenscheibe 1 besteht aus einem zylindrischen Grundkörper mit einer äußeren Hüllkurve 2, die im Ausführungsbeispiel die Mantelfläche der Riemenscheibe ist. In die Riemenscheibe 1 ist eine umlaufende Rille 3 eingearbeitet, die zur Mantelfläche 2 hin offen ist. Die Rille 3 hat gerade Rillenflanken 4, die einen Keilwinkel $\alpha$ einschließen und symmetrisch zu einer radialen Symmetrieebene 5 liegen, auf der die Mittelachse 6 der Riemenscheibe lotrecht steht. Die Riemenscheibe weist ferner eine mittige Aufnahmebohrung 7 für eine Welle des Riementriebes auf.

Der Grundkörper der Riemenscheibe 1 ist im gezeigten Ausführungsbeispiel einteilig aus Grauguß gefertigt. Die Rille (Scheibenrille) wird dabei durch mechanische Bearbeitung entsprechend der Erfindung gebildet. Es kann auch vorteilhaft sein, den Grundkörper aus Blechen zusammenzusetzen, die gleichzeitig die Scheibenrille begrenzen.

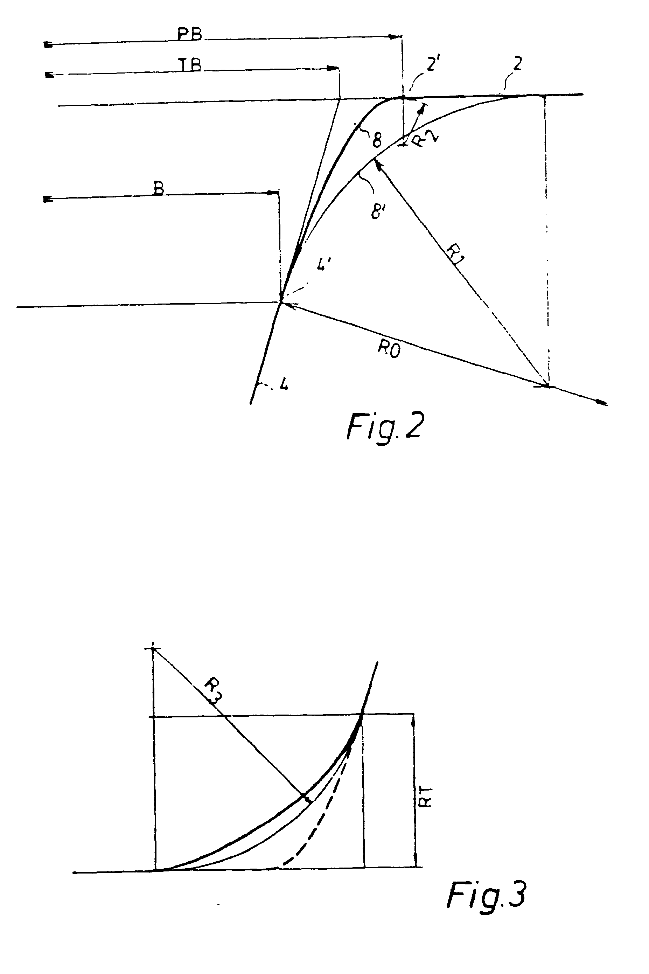

Die Scheibenrille 3 einer Rillenscheibe 1 ist durch folgende, in Fig. 2 eingezeichnete Bezugsgrößen bestimmt:

Die Bezugsbreite B der Scheibenrille 3, die die Rillenbreite gemäß DIN-Norm kennzeichnet und am äußeren Ende 4' der geraden Rillenflanke 4 am Anschluß zum erfindungsgemäß gerundeten Übergang 8 parallel zur Achse 6 gemessen wird.

Die theoretische Rillenbreite TB, die im theoretischen Schnittpunkt der verlängerten Rillenflanke 4 mit der Mantelfläche 2 abgegriffen wird.

Die praktische Rillenbreite PB, die am Anschlußpunkt 2' des Übergangs zur Mantelfläche 2 gemessen ist.

Wie in Fig. 2 vergrößert dargestellt, ist der Übergang 8 vom Ende 4' der geradlinig verlaufenden Rillenflanke 4 zum Anschlußpunkt 2' der zylindrischen Mantelfläche der Riemenscheibe 1 mit unterschiedlichem Radius R ausgebildet. Der an die Rillenflanke 4 anschließende Bereich des Übergangs 8 weist einen größeren Krümmungsradius $R_0$ auf als der Bereich des Übergangs 8, der an die Mantelfläche 2 der Riemenscheibe anschließt. Der im Anschlußpunkt 2' vorgesehene Radius $R_2$ ist um Faktoren kleiner als der Radius $R_0$. Dabei verändert sich der Radius ausgehend vom Ende 4' im Anschlußpunkt 2' vorzugsweise kontinuierlich, so daß eine gleichmäßige Übergangskurve gebildet ist. Es kann auch zweckmäßig sein, den Übergang 8 aus aneinander anschließenden Abschnitten zu bilden, die jeweils unterschiedliche Radien aufweisen und eine gemeinsame, den Übergang 8 bildende Einhüllende bestimmen. Bei einer derartigen Ausbildung steigt der Radius vom Ausgangspunkt 2' der Mantelfläche zum Ende 4' der Rillenflanke 4 diskontinuierlich, insbesondere sprunghaft an. In Sonderfällen kann es zweckmäßig sein, statt einer stetigen Übergangskurve eine unstetige Übergangskurve vorzusehen.

Wie sich aus Fig. 2 ferner ergibt, ist bei einem gerundeten Übergang 8' mit konstantem Radius $R_1$, der erheblich kleiner als der Radius $R_0$ am Ende 4' der Rillenflanke 4 ist, einerseits die Anlagefläche der Rillenflanke 4 im wesentlichen durch das Ende 4' begrenzt, andererseits die minimal mögliche, axiale Baulänge (Rillenabstand) einer derartigen Riemenscheibe erheblich länger. Mit dem erfindungsgemäß gerundeten Übergang 8 ist die nutzbare Anlagefläche der Rillenflanke 4 über dessen Ende 4' hinaus beträchtlich verlängert, so daß ein Riemen eine radial weit außenliegende Anlagefläche zu einer hohen Leistungsübertragung nutzen kann. Ferner kann mit dem erfindungsgemäßen Übergang 8 der Rillenabstand zu benachbarten Rillen (bei mehrrilligen Riemenscheiben) und die axiale Baulänge der Riemenscheibe 1 wesentlich kleiner ausgeführt werden als bei einem gerundeten Übergang 8' mit konstantem Krümmungsradius $R_1$, der zudem nur ein Bruchteil des Rundungsradius $R_0$ beträgt.

In vorteilhafter Weiterbildung der Erfindung ist der Radius nach einer differenzierbaren mathematischen Funktion bestimmt, wodurch sich die erfindungsgemäße Riemenscheibe mit einer NC-Maschine ohne Schwierigkeiten fertigen läßt. Eine derartige Funktion ist vorzugsweise eine Kegelschnittfunktion, wie eine Parabel, eine Hyperbel, eine Ellipse o.dgl. Es kann auch zweckmäßig sein, eine transzendente, vorzugsweise eine trigonometrische Funktion, wie insbesondere eine Sinusfunktion vorzusehen.

Das Profil der erfindungsgemäß ausgestalteten Scheibenrille ist dabei vorteilhaft durch vektorielle Zusammensetzung zweier Grundbewegungen des Schnittwerkzeugs erzielbar. Das Schnittwerkzeug führt hierzu in Richtung einer X-Koordinate eine Bewegung mit konstanter Vorschubgeschwindigkeit aus, während in der Y-Koordinate eine von Null an bis zu einem bestimmten Grenzwert gleichmäßig beschleunigte Vorschubbewegung (Massenkraft konstant) vorgesehen ist. Die X-Koordinate verläuft dabei in Richtung der Achse 6, während die Y-Koordinate in Richtung der Symmetrieebene 5 verläuft.

Nach dem bevorzugten Ausführungsbeispiel der Erfindung ist die Funktion, nach der sich der Radius R des Übergangs verändert, eine einfache Parabel zweiten Grades. Der Scheitel der Parabel liegt dabei im Anschlußpunkt 2' der Mantelfläche 2 der Rillenscheibe 1. Sollte es zur Verringerung der radialen Baugröße der Riemenscheibe erforderlich sein, so kann der Scheitel der Parabel auch benachbart, z.B. knapp oberhalb zur Hüllkurve bzw. Mantelfläche der Riemenscheibe liegen. Der Parabelast geht im Bereich der Bezugsbreite B in das Ende 4' der Rillenflanke 4 über. Bei einer derartigen Ausbildung ist eine Scheibenrille 3 mit verlängerter Anlagefläche geschaffen, die eine gegenüber der theoretischen Rillenbreite TB vergrößerte Rillenbreite im Bereich der Mantelfläche 2 aufweist.

Bevorzugt ist der Krümmungsradius $R_0$ im Bereich der Rillenflanke 4 mindestens etwa viermal größer als ein Krümmungsradius $R_1$, der bei ansonsten gleichen geometrischen Verhältnissen der Riemenscheibe bei kreisförmiger Ausbildung des Übergangs 8 möglich ist.

In vorteilhafter Weiterbildung der Erfindung ist auch der Rillengrund 9 der Scheibenrille 3 mit einem veränderlichen Krümmungsradius ausgebildet. Die Veränderung des Krümmungsradius verläuft dabei ausgehend von einer Rillenflanke 4 zum Rillengrund 9 vorzugsweise stetig. Auch der Rillengrund kann nach einer differenzierbaren mathematischen Funktion von einer NC-Maschine gesteuert werden. Der in Fig. 3 in dünner Linie ausgezogene Übergang mit dem Radius $R_3$ zeigt eine normal gerundete Kurve. Die durchgezogene Linie zeigt einen mit einer NC-Maschine gebildeten Übergang, wobei die Bewegung des Schnittwerkzeugs aus einer vektoriellen Zusammensetzung von Bewegungen in X- und Y-Richtung bestimmt ist. Bei der ausgezogenen Linie ist—bei konstanter Geschwindigkeit in X-Richtung—das Schnittwerkzeug in Y-Richtung gleichmäßig beschleunigt bewegt. Der strichliert gezeichnete Übergang ist aus einer vektoriellen Zusammensetzung einer in Y-Richtung gleichmäßig verzögerten Bewegung und einer in Richtung der X-Ache konstanten Bewegung des Schnittwerkzeugs gebildet.

## Patentansprüche

1. Riemenscheibe für Keilriemen, bestehend aus einem Rundkörper und mindestens einer radial nach außen offenen Rille (3), deren innere Rillenflanken (4) im Radialschnitt gesehen gerade verlaufen und einen Rillenwinkel ($\alpha$) einschließen und die zumindest an ihren radial äußeren Enden (4') einen weitgehend abgerundeten Übergang (8) zu einer äußeren Hüllkurve (2) der Riemenscheibe (1) aufweist, wobei die Wirkzone des Keilriemens deutlich oberhalb der Bezugsbreite der Riemenscheibe liegt, dadurch gekennzeichnet, daß der Übergang (8) mehr als zwei Krümmungsradien aufweist, wobei der an die Rillenflanke (4) anschließende Krümmungsradius (R0) größer als der an die Hüllkurve (2) anschließende Krümmungsradius (R2) ist.

2. Riemenscheibe nach Anspruch 1, dadurch gekennzeichnet, daß die unterschiedlichen Radien des Überganges (8) ausgehend von der Rillenflanke (4) zur äußeren Hüllkurve (2) hin kontinuierlich abnehmen.

3. Riemenscheibe nach Anspruch 1, dadurch gekennzeichnet, daß die unterschiedlichen Radien des übergangs (8) ausgehend von der Rillenflanke (4) diskontinuierlich abnehmen.

4. Riemenscheibe nach einem der Ansprüche 1 bis 3, dadurch gekennzeichnet, daß sich die unterschliedlichen Radien (R) nach einer differenzierbaren mathematischen Funktion bestimmen.

5. Riemenschiebe nach Anspruch 4, dadurch gekennzeichnet, daß die Funktion eine Kegelschnittfunktion, insbesondere eine Parabelfunktion ist.

6. Riemenscheibe nach Anspruch 5, dadurch gekennzeichnet, daß der Scheitel der Parabel benachbart zur Hüllkurve (2) der Riemenscheibe (1) liegt und ein Parabelast im Bereich der Bezugsbreite (B) der Rille (3) in die Rillenflanke (4) übergeht.

7. Riemenscheibe nach Anspruch 6, dadurch gekennzeichnet, daß der Scheitelpunkt der Parabel ein Punkt der Hüllkurve (2) ist.

8. Riemenscheibe nach einem der Ansprüche 5 bis 7, dadurch gekennzeichnet, daß die Funktion eine einfache Parabel zweiten Grades ist.

9. Riemenscheibe nach Anspruch 4, dadurch gekennzeichnet, daß die Funktion eine transzendente, vorzugsweise trigonometrische Funktion, insbesondere eine Sinusfunktion ist.

10. Riemenscheibe nach einem der Ansprüche 1 bis 9, dadurch gekennzeichnet, daß der Krümmungsradius ($R_0$) im Bereich der Rillenflanke (4) mindestens etwa viermal größer ist als ein bei ansonsten gleichen geometrischen Verhältnissen der Riemenscheibe (1) möglicher kreisförmiger Übergang (8') mit konstantem Radius ($R_1$).

## Revendications

1. Poulie pour courroies trapézoïdales constitué d'un corps rond et par au moins une gorge ouverte (3) radialement vers l'extérieur dont les flancs intérieurs de la gorge (4), considérés en coupe radiale, s'étendent de manière rectiligne et délimitent un angle de gorge ($\alpha$), et qui présente, au moins à ses extrémités extérieures (4) radialement une partie de transition (8) largement arrondie avec une courbe enveloppante (2) extérieure de la poulie (1), en raison de quoi la zone active de la courroie trapézoïdale se trouve nettement au-dessus de la largeur de référence de la poulie, caractérisée en ce que la partie de transition (8) présente plus de deux rayons de courbure et en ce que le rayon de courbure ($R_0$) se raccordant au flanc de la gorge (4) est plus grand que le rayon de courbure ($R_2$) qui se raccorde à l'enveloppante (2).

2. Poulie selon la revendication 1, caractérisée en ce que les différent rayons de la partie de transition (8) décroissent de manière continue entre le flanc de la gorge (4) et l'enveloppante extérieure (2).

3. Poulie selon la revendication 1, caractérisée en ce que les différent rayons de la partie de transition (8) décroissant de manière discontinue à partir du flanc de la gorge (4).

4. Poulie selon l'une des revendications 1 à 3, caractérisée en ce que les différent rayons se déterminent d'après une fonction mathématique différenciable.

5. Poulie selon la revendication 4, caractérisée en ce que la jonction est une jonction conique, et notamment une jonction de parabole.

6. Poulie selon la revendication 5, caractérisée en ce que le sommet de la parabole est voisin de l'enveloppante (2) de la poulie (1) et en ce qu'une branche de parabole se transforme en flanc de la gorge (4) dans la zone de la largeur de référence (B) de la gorge (3).

7. Poulie selon la revendication 6, caractérisée en ce que le point situé au sommet de la parabole est un point de l'enveloppante (2).

8. Poulie selon l'une des revendications 5 à 7, caractérisée en ce que la jonction est une parabole simple du second degré.

9. Poulie selon la revendication 4, caractérisée en ce que la jonction est une jonction transcendante, de préférence trigonométrique, et en particulier une fonction sinusoïdale.

10. Poulie selon l'une des revendications 1 à 9, caractérisée en ce que le rayon de courbure ($R_0$) est dans la région du flanc de gorge (4) au moins quatre fois plus grand environ qu'une partie de transition (8') en forme de cercle possible, avec un rayon constant ($R_1$) les caractéristiques géométriques étant par ailleurs les mêmes.

**Claims**

1. A belt pulley for V-belts, comprising a round body and at least one radial outwardly-open groove (3), the inner groove flanks (4) of which, seen in radial section, have a straight course and include a groove angle ($\alpha$), and which possesses, at least at their radially-outer ends (4'), a largely rounded-off transition (8) to an outer peripheral rim (2) of the belt pulley (1), the effective zone of the V-belt lying clearly above the reference width of the belt pulley, characterised in that the transition (8) possesses more than two radii of curvature, and the radius of curvature (R0) adjoining the groove flank (4) is greater than the radius of curvature (R2) adjoining the peripheral rim (2).

2. A belt pulley according to Claim 1, characterised in that the different radii of the transition (8) continuously decrease, starting from the groove flank (4), to the outer peripheral rim (2).

3. A belt pulley according to Claim 1, characterised in that the different radii of the transition (8) decrease discontinuously, starting from the groove flank (4).

4. A belt pulley according to any one of Claims 1 to 3, characterised in that the different radii (R) are determined according to a differentiatable mathematical function.

5. A belt pulley according to Claim 4, characterised in that the function is an elliptical function, especially a parabolic function.

6. A belt pulley according to Claim 5, characterised in that the apex of the parabola lies adjacent to the peripheral rim (2) of the belt pulley (1) and one parabola branch merges in the region of the reference width (B) of the groove (3) into the groove flank (4).

7. A belt pulley according to Claim 6, characterised in that the apex point of the parabola is a point of the peripheral rim (2).

8. A belt pulley according to any one of Claims 5 to 7, characterised in that the function is a simple parabola of second degree.

9. A belt pulley according to Claim 4, characterised in that the function is a transcendent, preferably trigonometric function, especially a sine function.

10. A belt pulley according to any one of Claims 1 to 9, characterised in that the radius of curvature ($R_0$) in the region of the groove flank (4) is at least about four times larger than a circular transition (8') with constant radius ($R_1$), possible in the case of otherwise equal geometrical conditions of the belt pulley (1).

*Fig. 1*

Fig.2

Fig.3